Europäisches Patentamt

European Patent Office

Office européen des brevets

(11) Numéro de publication: **0 225 214**
**A1**

## (12) DEMANDE DE BREVET EUROPEEN

(21) Numéro de dépôt: **86402340.3**

(22) Date de dépôt: **17.10.86**

(51) Int. Cl.⁴: **G 01 N 27/12**

(30) Priorité: **17.10.85 FR 8515422**

(43) Date de publication de la demande:
**10.06.87 Bulletin 87/24**

(84) Etats contractants désignés:
**BE CH DE GB IT LI LU NL SE**

(71) Demandeur: **LA VENTILATION INDUSTRIELLE ET MINIERE**
**Rue du Clos Reine**
**F-78410 Aubergenville (FR)**

(72) Inventeur: **Roussel, Michel**
**14 Avenue de Cressac Elancourt**
**F-78310 Maurepas (FR)**

(74) Mandataire: **Durand, Yves Armand Louis et al**
**Cabinet Z. Weinstein 20, Avenue de Friedland**
**F-75008 Paris (FR)**

(54) **Dispositif détecteur d'humidité, procédé de fabrication de ce dispositif et utilisation de ce dispositif en combinaison avec une bouche de ventilation.**

(57) L'invention concerne un dispositif et un procédé détecteur d'humidité.

Ce dispositif est caractérisé en ce qu'il est formé de deux plaquettes (2,4) conductrices de l'électricité accolées entre elles sans contact par une couche intermédiaire (6a, 6b) de milieu adhésif non conducteur de l'électricité, d'une structure microporeuse permettant la fixation d'un électrolyte et l'absorption de l'humidité, lesdites plaquettes étant enrobées d'un électrolyte approprié, par exemple à base de chlorure de lithium.

FIG. 1

EP 0 225 214 A1

## Description

"Dispositif détecteur d'humidité, procédé de fabrication de ce dispositif et utilisation de ce dispositif en combinaison avec une bouche de ventilation"

La présente invention concerne essentiellement un dispositif détecteur d'humidité, un procédé de fabrication de ce dispositif et son utilisation en combinaison avec une bouche de ventilation.

On a décrit dans le brevet principal FR-840113, non publié. une installation de ventilation réglable en fonction de la température et du taux d'humidité du flux d'air. Cette installation comprend, outre une bouche de ventilation particulière faisant l'objet du brevet principal, un dispositif 14 détecteur d'humidité constitué par un corps dont la résistance électrique varie en fonction du taux d'humidité. Ce détecteur est alimenté par le secondaire du transformateur 12 et délivre, au-delà d'un certain seuil de conductivité, la tension nécessaire au déblocage du triac intégré dans le circuit 13. On y indique que le dispositif détecteur d'humidité 14 est démontable par rapport à un support fixe qui peut comprendre le circuit 13 en vue de faciliter un remplacement par simple débrochage puisque ce dispositif détecteur peut à l'usage se recouvrir d'une couche grasse imperméable (voir page 5, ligne 25 à page 6 ligne 24).

On retrouve la même description dans le premier Certificat d'Addition FR-8501315, également non publié.

La conception de tels détecteurs d'humidité basée sur la variation de la résistance en fonction du taux d'humidité n'est pas d'une précision suffisante et n'offre donc pas suffisamment de sécurité. Ils doivent donc être utilisés en combinaison avec un dispositif électronique compliqué.

La présente invention a pour but de résoudre le nouveau problème technique consistant en la fourniture d'un dispositif détecteur d'humidité d'une conception particulièrement simple résultant en un coût de fabrication relativement faible, tout en étant d'une grande précision en offrant ainsi une sécurité de fonctionnement accrue.

Ce nouveau problème technique est résolu pour la première fois par la présente invention.

Ainsi, selon un premier aspect, la présente invention fournit un dispositif détecteur d'humidité, caractérisé en ce qu'il est formé de deux plaquettes conductrices de l'électricité accolées entre elles sans contact par une couche intermédiaire d'un milieu adhésif non conducteur de l'électricité, d'une structure microporeuse permettant la fixation d'un électrolyte et l'adsorption de l'humidité, lesdites plaquettes étant enrobées d'un électrolyte approprié.

Selon un mode de réalisation préféré, ledit milieu adhésif contient une poudre de verre de granulométrie calibrée, ce qui permet de maintenir un espacement constant entre lesdites deux plaquettes conductrices de l'électricité. De préférence. la poudre de verre est d'une granulométrie comprise entre environ 180 et 210 micromètres.

Selon un mode de réalisation préféré, une des plaquettes conductrices précitées au moins comprend une pluralité de perforations.

Selon un mode de réalisation particulier, les plaquettes précitées sont réalisées en graphite tandis que l'électrolyte est un électrolyte à base de chlorure de lithium.

Selon un autre aspect, la présente invention fournit également un procédé de fabrication d'un dispositif détecteur d'humidité, caractérisé en ce qu'il comprend;
- la prévision de deux plaquettes conductrices de l'électricité,
- l'adhésion desdites deux plaquettes à faible distance par l'interposition d'un milieu adhésif non conducteur de l'électricité, d'une structure microporeuse permettant la fixation d'un électrolyte et l'adsorption de l'humidité ;
- et, l'immersion de l'ensemble des deux plaquettes accolées dans un électrolyte approprié, puis séchage de l'électrolyte, en obtenant ainsi ledit dispositif détecteur d'humidité.

Selon un mode de réalisation préféré, après avoir revêtu ou enrobé les surfaces en regard de chacune desdites deux plaquettes du milieu adhésif non conducteur de l'électricité précitées, on saupoudre la couche du milieu adhésif d'au moins une plaquette avec une poudre de verre de granulométrie calibrée. De préférence, cette granulométrie est comprise entre environ 180 et 210 micromètres.

En outre, selon un mode de réalisation particulièrement avantageux, l'une desdites plaquettes comprend une pluralité de perforations.

D'autres buts, caractéristiques et avantages de l'invention apparaîtront clairement à la lumière de la description explicative qui va suivre faite en référence aux figures annexées représentant un mode de réalisation actuellement préféré de l'invention.

- la figure 1 est une vue en perspective éclatée d'un dispositif détecteur d'humidité selon l'invention avant assemblage ; et
- la figure 2 est une vue du dispositif de la figure 1 assemblé.

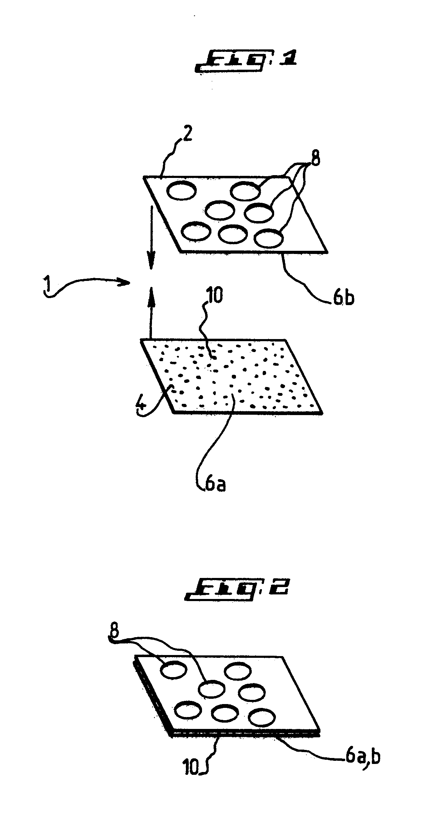

En référence aux figures annexées, un dispositif détecteur d'humidité selon l'invention, représenté par un numéro de référence général 1, est caractérisé en ce qu'il est formé de deux plaquettes conductrices de l'électricité respectivement référencées 2 et 4, accolées entre elles sans contact par une couche intermédiaire 6a, 6b d'un milieu adhésif non conducteur de l'électricité, d'une structure microporeuse permettant la fixation d'un électrolyte et l'adsorption de l'humidité. Ainsi, on observera que chacune des plaquettes 2, 4 est tout d'abord revêtue ou enrobée respectivement d'une couche 6a, 6b de milieu adhésif non conducteur de l'électricité avant de les accoler ensemble. Le séchage du milieu adhésif procure une bonne adhésion des plaquettes 2,4.

Les plaquettes sont ensuite enrobées d'un électrolyte approprié par immersion de l'ensemble des deux plaquettes dans un électrolyte approprié. Cet électrolyte peut être de préférence un électrolyte à base de chlorure de lithium, et en particulier une solution aqueuse à 18% en poids de chlorure de lithium dans l'eau.

Selon un mode de réalisation préféré, une des plaquettes 2, 4 au moins, ici la plaquette 2, comprend une pluralité de perforations 8. La dimension de ces perforations n'est pas critique et naturellement le diamètre de chaque perforation sera très nettement inférieur à la dimension de la plaquette et pourra être de l'ordre de 1/5 à 1/10 de la dimension d'un côté de la plaquette.

Selon un mode de réalisation préféré, le milieu adhésif 6a, 6b contient une poudre de verre 10 de granulométrie calibrée. De préférence cette granulométrie est comprise entre environ 180 et 210 micromètres.

Cette poudre de verre est ajoutée de préférence par saupoudrage de la couche de milieu adhésif avec cette poudre de verre de granulométrie calibrée. La présence de cette poudre de verre offre l'avantage particulièrement important inattendu de permettre un écart constant entre les plaquettes, ce qui est particulièrement difficile à obtenir.

La distance entre les plaquettes est habituellement de l'ordre de 0,2 mm, sans caractère critique.

D'autre part, le milieu adhésif non conducteur à l'électricité à utiliser selon l'invention est immédiatement apparent à un homme du métier. On peut citer à titre d'exemple une pâte adhésive assurant une bonne adhésion des plaquettes après séchage, donnant une structure microporeuse permettant la fixation de l'électrolyte et l'adsorption de l'humidité. On peut citer à titre d'exemple la pâte commercialisée sous la dénomination commerciale "Sintofer"R

La dimension et la forme des plaquettes n'est pas critique, de même que leur épaisseur et en général ces plaquettes sont de faible épaisseur, de l'ordre de 1mm.

De préférence, ces plaquettes sont réalisées en graphite.

Le procédé de fabrication de ce dispositif détecteur d'humidité résulte de la description précédente et a été mentionné à la partie introductive de la description.

Naturellement, l'invention comprend tous les moyens constituant des équivalents techniques des moyens décrits ainsi que leurs diverses combinaisons. Ce dispositif peut être utilisé en combinaison avec une bouche de ventilation, qu'elle soit d'admission ou d'extraction, de préférence équipée d'une diode luminescente, allumée à partir d'un certain seuil d'ouverture de ladite bouche, qui est avantageusement une bouche d'extraction, cette diode permet de rappeler à l'usager que sa ventilation est en régime accéléré (ce qui entraîne des consommations d'énergie importantes) ou que le dispositif détecteur est déficient (encrassé) si la diode reste allumée alors que la ventilation fonctionne en régime réduit.

## Revendications

1. Dispositif détecteur d'humidité, caractérisé en ce qu'il est formé de deux plaquettes (2, 4) conductrices de l'électricité accolées entre elles sans contact par une couche intermédiaire (6a, 6b) d'un milieu adhésif non conducteur de l'électricité, d'une structure microporeuse permettant la fixation d'un électrolyte et l'adsorption de l'humidité, lesdites plaquettes étant enrobées d'un électrolyte approprié.

2. Dispositif selon la revendication 1, caractérisé en ce que le milieu adhésif précité (6a, 6b) contient une poudre de verre (10) de granulométrie calibrée.

3. Dispositif détecteur d'humidité selon la revendication 2, caractérisé en ce que la poudre de verre a une granulométrie comprise entre environ 180 et 210 micromètres.

4. Dispositif détecteur d'humidité selon l'une des revendications 1 à 3, caractérisé en ce qu'une des plaquettes au moins (2) comprend une pluralité de perforations (8).

5. Dispositif détecteur d'humidité selon l'une des revendications 1 à 4, caractérisé en ce que les plaquettes sont réalisées en graphite et avantageusement l'électrolyte est à base de chlorure de lithium.

6. Procédé de fabrication d'un dispositif détecteur d'humidité, caractérisé en ce qu'il comprend :
- la prévision de deux plaquettes (2, 4) conductrices de l'électricité ;
- l'adhésion desdites deux plaquettes (2, 4) à faible distance par interposition d'un milieu adhésif (6a, 6b) non conducteur de l'électricité, d'une structure microporeuse permettant la fixation d'un électrolyte et l'adsorption de l'humidité ; et
- l'immersion de l'ensemble des deux plaquettes (2,4) accolées dans un électrolyte approprié, puis séchage de l'électrolyte, en obtenant ainsi ledit dispositif détecteur d'humidité.

7. Procédé selon la revendication 6, caractérisé en ce que, après avoir revêtu ou enrobé les faces en regard des plaquettes du milieu adhésif non conducteur précitées, on saupoudre au moins l'une (6a) desdites couches d'adhésif avec une poudre de verre (10) de granulométrie calibrée.

8. Procédé selon la revendication 7, caractérisé en ce que la poudre de verre présente une granulométrie comprise entre environ 180 et 210 micromètres.

9. Procédé selon l'une des revendications 6 à 8, caractérisé en ce que l'une (2) des plaquettes (2, 4) précitées comprend une pluralité de perforations (8).

10. Utilisation du dispositif détecteur d'humidité tel que défini à l'une quelconque des revendications 1 à 5 ou tel qu'obtenu par le procédé selon l'une quelconque des revendications 6 à 9, en combinaison avec une bouche de ventilation, qu'elle soit d'admission ou d'extraction, de préférence équipée d'une diode luminescente allumée à partir d'un certain seuil d'ouverture de ladite bouche qui est avantageusement une bouche d'extraction.

Fig. 1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | TRANSACTIONS OF THE AIEE, COMM. & ELECTRONICS, vol. 77, partie 1, juillet 1958, pages 302-305, New York, US; W.H. MEIKLEJOHN: "Electric hygrometer" * En entier * | 1,4,5 | G 01 N  27/12 |
| A | PATENTS ABSTRACTS OF JAPAN, vol. 7, no. 130 (P-202)[1275], 7 juin 1983; & JP-A-58 47 245 (TATEISHI DENKI K.K.) 18-03-1983 | 1,4,6 | |

DOMAINES TECHNIQUES RECHERCHES (Int. Cl.4)

G 01 N  27/00

Le présent rapport de recherche a été établi pour toutes les revendications

| Lieu de la recherche | Date d'achèvement de la recherche | Examinateur |
|---|---|---|
| LA HAYE | 06-02-1987 | BINDON C.A. |